# EUROPÄISCHE PATENTANMELDUNG

(11) **EP 0 789 007 A1**
(43) Veröffentlichungstag der Anmeldung: **13.08.1997**
(21) Anmeldenummer: 97101883.3
(22) Anmeldetag: 06.02.1997
(51) Int. Cl.: C04B 37/00

(54) **Verklebung von nichtoxidischen keramischen, keramometallischen oder metallischen Körpern**

(30) Priorität: 10.02.1996 DE 19604844
(71) Anmelder: FORSCHUNGSZENTRUM JÜLICH GMBH, 52425 Jülich (DE)
(72) Erfinder: Steinbrech, Rolf, Dr., 52428 Jülich (DE); Futakawa, Masatoshi, Dr., Mito-shi, Ibaraki-ken (JP)

(57) **Zusammenfassung**

Die Erfindung betrifft ein Verfahren zum Verkleben von Körpern (1) mit aus nichtoxidischem keramischen, keramometallischen oder metallischen Material bestehenden Oberflächen. Das vorgenannte Material wird zunächst derart umgewandelt, daß amorphe Oxidschichten auf den Klebeflächen hergestellt werden. Anschließend werden die Klebeflächen bei Temperaturen und Drücken, bei denen homogene Verbindungen (3) zwischen den amorphen Oxidschichten entstehen, zusammengepreßt.

Es entsteht so ein nichtoxidischer keramischer, keramometallischer oder metallischer Körper (1) mit amorphen, verfahrensgemäß hergestellten Oxidschichten (3) innerhalb des Körpers (1).

Die Erfindung ermöglicht stabile Klebeverbindungen mit sehr dünnen Klebschichten.

## Beschreibung

Die Erfindung bezieht sich auf ein Verfahren zum Verkleben von Körpern mit nichtoxidischen keramischen, keramometallischen oder metallischen Oberflächen sowie auf verfahrensgemäß hergestellte nichtoxidische keramische, keramometallische oder metallische Körper.

Beispiele für Körper mit nichtoxidischer keramischer Oberfläche sind Karbidkörper, z. B. bestehend aus SiC oder SiSiC oder Nitridkörper z. B. bestehend aus Si₃N₄.

Beispiele für Körper mit nichtoxidischer metallischer Oberfläche ist die aus FR-PS 1 445 882 bekannte, mit Si beschichtete Nb-Legierung.

Ziel beim Verkleben von keramischen Körpern ist die Schaffung von mechanisch stabilen Verbindungen zwischen den Körpern. In vielen Anwendungsfällen muß sich diese Verbindung auch unter problematischen äußeren Bedingungen stabil verhalten. Beispiele für problematische äußere Bedingungen sind hohe, tiefe oder ständig wechselnde Temperaturen sowie chemisch agressive Atmosphären. Weiter soll in vielen Fällen die Klebeschicht extrem dünn sein, um vorgegebene Abmessungen sehr genau einhalten zu können.

Aufgabe der Erfindung ist die Schaffung eines Verfahrens zum Verkleben von nichtoxidischen, keramischen, keramometallischen oder metallischen Körpern sowie die Bereitstellung derartig verklebter Körper, bei denen die Klebverbindungen die vorgenannten Eigenschaften erfüllen.

Gelöst wird die Aufgabe durch ein Verfahren mit den Merkmalen des Hauptanspruchs sowie durch einen Körper mit den Merkmalen des Nebenanspruchs.

Verfahrensgemäß werden zunächst amorphe oxidische Schichten auf den Klebeflächen hergestellt. Unter Klebeflächen sind die Flächen zu verstehen, die miteinander verklebt werden sollen.

Zwecks Bildung amorpher Oxidschichten werden die Körper in oxidierender, mit Wasserdampf befeuchteter Atmosphäre derart erhitzt, daß sich auf den Oberflächen Oxidschichten ausbilden. Zur Bildung von amorphen Strukturen müssen glasbildende Metalle oder deren Oxide in die sich bildenden Oxidschichten eingebaut werden.

Als glasbildende Metalle eignen sich Alkalimetalle wie Kalium. Auch andere Metalle wie Aluminium können die Enstehung einer Glasphase bewirken.

Die glasstabilisierenden Metalle können über die Atmosphäre oder über die Körper zur Bildung der Schicht als Legierungselement eingebaut werden.

Die Metalle können auf verschiedene Weise der Atmosphäre beigefügt werden. Z. B. können der wasserdampfhaltigen Atmosphäre Oxide, die als Hydroxide gasförmig sind, zugegeben werden. Sie können auch als reine Metalle oder als Metallgemische der Atmosphäre ausgesetzt werden.

Die Reaktion läuft mit steigender Temperatur schneller ab, wird aber nach oben von der Eigenschaft der Körper begrenzt (beispielsweise schmilzt reines Silicium bei 1410 °C).

Die Reaktion, Reaktionsgeschwindigkeit und Gasstabilität sind entsprechend der Thermodynamik und Kinetik von den verschiedenen Elementen des Gasgemisches abhängig. Insbesondere spielen der Sauerstoff- und Wasserpartialdruck sowie die Temperatur eine Rolle.

Die Zusammensetzung des Gasgemisches an der Substrat- bzw. der Oxidschichtoberfläche ist die entscheidende Größe, die die Aufnahme der Glasbildner in die Schicht beeinflußt.

Eine alternative Herstellungsweise besteht darin, daß die glasbildenden Metalle bereits in den Oberflächen der Körper enthalten sind und durch Diffusion in die sich bildende Oxidschicht eingebaut werden und so die Glasphase herbeiführen.

Die Herstellung von amorphen, oxidischen Schichten auf keramischen, metallischen oder keramometallischen Körpern ist ferner aus DE-AS 2 447 482 (auf Si-haltigen Stählen mit 2-4% Si wird eine aus Forsterit bestehende Glasschicht hergestellt), CH-PS 471 240 (eine amorphe SiOₓ-Schicht wird auf Si hergestellt), FR-PS 1 445 882 (eine Glasschicht aus SiO₂ wird auf einer mit Si beschichtete Nb-Legierung hergestellt), GB-PS 1 332 569 (glasartige Silikatschichten werden auf Si enthaltenden Legierungsstählen hergestellt) sowie aus GB-PS 1 251 827 (eine Glasschicht auf SiO₂-Basis wird auf Si-haltigen Stählen hergestellt) bekannt.

Im nächsten Schritt werden die Klebeflächen bei hohen Temperaturen zusammengepreßt. Temperatur und Druck sind so zu wählen, daß homogene Verbindungen zwischen den amorphen Schichten entstehen, d. h. die zwei amorphen Schichten verbinden sich zu einer amorphen Schicht. Je höher Temperatur und Druck gewählt werden, desto schneller wird die gewünschte Verbindung erzielt.

Die so hergestellte amorphe Klebeverbindung verhält sich auch bei starken Temperaturschwankungen im Gegensatz zu z. B. einer kristallinen Verbindung mechanisch stabil. Die von kristallinen Verbindungen her bekannten Rißbildungen treten bei der amorphen Klebeverbindung nicht mehr auf. Oxidschichten verhalten sich ferner z. B. in agressiven HCl-Atmosphären chemisch stabil. Ferner können auf diese Weise Klebeverbindungen hergestellt werden, die nur wenige µm dick sind.

Die mechanische Stabilität der Klebeverbindung ist besonders groß, wenn die miteinander zu verklebenden amorphen Schichten aus dem gleichen oxidischen Material bestehen, also z. B. aus amorphem SiO₂, welche auf Oberflächen von SiSiC-Körpern hergestellt worden sind. Unter Inkaufnahme einer im allgemeinen weniger stabilen Verbindung ist jedoch auch die Verklebung von amorphen Schichten, die aus unterschiedlichen Materialien bestehen, möglich.

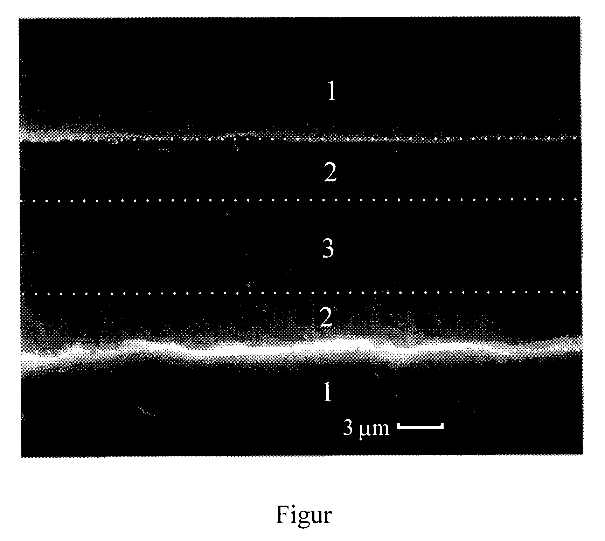

Die Figur zeigt zwei miteinander verklebte SiSiC-Körper.

Zunächst wurde SiSiC in wasserdampfhaltiger Atmosphäre oxidiert: N₂ + 4 % H₂ wurde mit Wasser bei 90 °C befeuchtet, so daß eine zu 70 % wasserhaltige Atmosphäre entstand. Diese Atmosphäre wurde durch ein auf 1370 °C aufgeheiztes Rohr aus ca. 60 % Al₂O₃, ca. 35 % SiO₂, ca. 5 % K₂O geleitet. In diesem Rohr befanden sich die SiSiC-Körper. Auf den Körpern entstanden zweilagige Oxidschichten. Eine amorphe Phase bildete sich zur freien Oberfläche und Cristobalit (kristalline SiO₂-Modifikation) zum Grundwerkstoff hin. Nach einer Versuchsdauer von einer Woche erreichten die Schichten eine Dicke von 10 µm, nach einem Monat eine Dicke von 20 µm.

Diese Oxidschichten zeigen folgende Eigenschaften: Thermoschockversuche lösen diese Schichten nicht ab. Beim Scratchtest wird keine Delamination beobachtet. Unter Biegebelastung treten keine Risse auf.

Messungen mit EDX zeigten, daß sich in den SiO₂-Schichten ca. 10 % K₂O und ca. 10 % Al₂O₃ befinden.

Schließlich wurden zwei in dieser Weise präparierten SiSiC-Körper an vorgesehenen Klebeflächen bei einer Temperatur von 1300 °C für 10 Minuten bei einem Druck von 25 MPa zusammengepreßt.

Es entstand der in der Figur ausschnittsweise dargestellte Körper. Die SiSiC-Körper 1 sind mittels einer Füge miteinander verbunden. Die Füge besteht aus kristallinen SiO₂-Bereichen 2 und dem amorphen Bereich 3. Der Maßstab ist am unteren Figurenrand aufgetragen.

In gleicher Weise wurden zwei SiC-Körper miteinander verklebt.
Scherversuche zeigten, daß sich die vorteilhaften mechanischen Eigenschaften der amorphen Deckschichten auf die Klebeverbindung 2, 3 übertragen hatten. Die Füge konnte noch bei Temperaturen von 1000 °C eingesetzt werden.

## Patentansprüche

1. Verfahren zum Verkleben von Körpern (1) mit aus nichtoxidischem keramischen, keramometallischen oder metallischen Material bestehenden Oberflächen mit den Schritten:
a)Umwandlung von vorgenanntem Material derart, daß amorphe Oxidschichten auf den Klebeflächen hergestellt werden,
b)Zusammenpressen der Klebeflächen bei Temperaturen und Drücken, bei denen homogene Verbindungen (3) zwischen den amorphen Oxidschichten entstehen.

2. Nichtoxidischer keramischer, keramometallischer oder metallischer Körper (1) mit amorphen, durch ein Verfahren gemäß Hauptanspruch hergestellten Oxidschichten (3) innerhalb des Körpers (1).
